# EUROPÄISCHE PATENTSCHRIFT

(11) **EP 1 578 242 B1**
(45) Veröffentlichungstag und Bekanntmachung des Hinweises auf die Patenterteilung: **11.07.2007**
(21) Anmeldenummer: 03813113.2
(22) Anmeldetag: 10.12.2003
(51) Int. Cl.: A47L 15/00

(54) **GESCHIRRSPÜLMASCHINE MIT ENERGIESPARENDEM HEIZMODUS, SOWIE VERFAHREN HIERZU**
DISHWASHER WITH AN ENERGY-SAVING HEATING MODE AND METHOD THEREFOR
LAVE-VAISSELLE PRESENTANT UN MODE DE CHAUFFAGE ECONOMISANT DE L'ENERGIE ET PROCEDE ASSOCIE

(30) Priorität: 17.12.2002 DE 10259062
(43) Veröffentlichungstag der Anmeldung: 28.09.2005
(73) Patentinhaber: BSH Bosch und Siemens Hausgeräte GmbH, 81739 München (DE)
(72) Erfinder: ROSENBAUER, Michael, 86756 Reimlingen (DE); STICKEL, Ernst, 89537 Giengen (DE); GROLL, Hubert, 89426 Mödingen (DE)
(86) Internationale Anmeldenummer: PCT/EP2003/014018
(87) Internationale Veröffentlichungsnummer: WO 2004/054426

(56) Entgegenhaltungen:
- EP-A- 0 593 876
- DE-A- 19 758 064
- DE-B- 1 226 248

## Beschreibung

Die Erfindung betrifft eine Geschirrspülmaschine mit energiesparendem Heizmodus sowie ein Verfahren zum Betreiben einer solchen Geschirrspülmaschine.

Bei herkömmlichen Geschirrspülmaschinen wird während einzelner Teilprogrammschritte, z. B. "Reinigen" und "Klarspülen" eine Spülflüssigkeit, üblicherweise als Spülflotte bezeichnet, erwärmt, wobei die Spülflotte über ein vorhandenes Sprühsystem, beispielsweise Sprüharme, das in der Geschirrspülmaschine befindliche Spülgut benetzt. Durch das stetige Umwälzen und Beaufschlagen des Spülguts mit der Spülflotte und einem gleichzeitigen Aufheizen der Spülflotte wird nicht nur die Spülflotte aufgeheizt, sondern auch das zu reinigende Spülgut sowie der Spülbehälter und die daran unmittelbar angeordneten Materialien, beispielsweise Dämmmaterial.

Um schließlich eine Spülflotte auf eine bestimmte Temperatur aufzuheizen, die vom Spülprogramm vorgesehen ist, muss in der Summe ein Energiebetrag aufgewendet werden, der neben der Spülflotte auch die Aufheizung des Spülguts und des Spülbehälters berücksichtigt.

Beispielsweise wird zu Beginn der Reinigungsphase eine erste Teilmenge der Spülflotte auf eine Temperatur aufgeheizt, beispielsweise 65°C und über das Sprühsystem auf das Spülgut gelenkt. Aufgrund der niedrigeren Temperatur des Spülguts von ca. 20 bis 24°C gibt die erste Teilmenge der Spülflotte eine gewissen Wärmemenge an das Spülgut ab, so dass die Temperatur des Spülgutes steigt, die Temperatur der Spülflotte jedoch sinkt. Die so abgekühlte Teilmenge der Spülflotte fließt über die Umwälzpumpe zurück und wird weiterhin aufgeheizt bis eine bestimmte Temperatur erreicht ist. Durch diesen stetigen Prozess wird bis zum Erreichen der gewünschten Spülflottentemperatur sowohl das Spülgut als auch Bereiche des Spülbehälters auf diese vorbestimmte Temperatur aufgeheizt.

Da zur Erzielung der gewünschten Reinigungsleistung jedoch lediglich die Temperatur der Spülflotte von Bedeutung ist, wird durch die Aufheizung des Spülguts und des Spülbehälters die Energiebilanz der Geschirrspülmaschine nachteilig beeinflusst.

EP-A-0 593 876 offenbart eine Geschirrspülmaschine mit einer eine Heizung aufweisenden Sprühsystem - Fließstrecke.

Aufgabe der vorliegenden Erfindung ist es daher, eine Geschirrspülmaschine und ein Verfahren bereitzustellen, um die für die Aufheizung der Spülflüssigkeit notwendige Energie bestmöglichst zu reduzieren.

Diese Aufgabe wird durch das erfindungsgemäße Verfahren mit den Merkmalen gemäß Anspruch 1 und durch die Geschirrspülmaschine mit den Merkmalen gemäß Anspruch 6 gelöst. Vorteilhafte Weiterbildungen der vorliegenden Erfindung sind durch die Unteransprüche gekennzeichnet.

Bei dem erfindungsgemäßen Verfahren zur Reduzierung des Energieverbrauchs wird während eines Teilprogrammschrittes, z. B. "Vorspülen", "Reinigen", "Zwischenspülen" und "Klarspülen" in einem Spülprogramm, z. B. "Universal 55", "Intensiv 70" oder synonyme Bezeichnungen in einer Geschirrspülmaschine in einem ersten Schritt die Spülflüssigkeit auf eine vorbestimmte Temperatur aufgeheizt und die Spülflüssigkeit während dieser Aufheizphase im wesentlichen nicht auf in der Geschirrspülmaschine befindliches Spülgut gelenkt und erst in einem zweiten Schritt die auf die vorbestimmte Temperatur aufgeheizte Spülflüssigkeit auf das im wesentlichen nicht erwärmte Spülgut gerichtet.

Vorteilhafterweise wird die Aufheizphase spätestens dann beendet, wenn das Spülgut die für die Spülflüssigkeit vorbestimmte Temperatur erreicht hat. Zweckmäßigerweise kann die Temperatur des Spülguts über einen Temperatursensor bestimmt werden, der im Spülbehälter vorzugsweise an einer Spülbehälterwand oder einer sonst geeigneten Stelle platziert ist.

Vorteilhafterweise wird die Spülflüssigkeit mittels Umwälzpumpe so umgewälzt, dass die Wärmeverteilung innerhalb der Spülflüssigkeit im wesentlichen homogen vorliegt. Beispielsweise wird durch eine von der Programmsteuerung ansteuerbaren Ventilschaltung ein vom Sprühsystem getrennter, als Fließstrecke ausgebildeter, vorzugsweise im wesentlichen geschlossener Kreislauf zum Umwälzen der Spülflüssigkeit geöffnet, so dass während dieser Aufheizphase die Spülflüssigkeit nicht über das Sprühsystem auf das Spülgut gelangen kann. Während der Aufheizphase zirkuliert die Spülflüssigkeit lediglich in diesem abgeschlossenen Leitungssystem und wird erst nach Erreichen einer vorbestimmten Temperatur in das Sprühsystem eingeleitet.

Bei einer anderen vorteilhaften Ausführungsform der vorliegenden Erfindung ist keine Ventilsteuerung vorgesehen, da eine Benetzung des Spülguts mit der Spülflüssigkeit dadurch verhindert wird, dass die Umwälzpumpe auf einem niedrigen Druckniveau die Spülflüssigkeit während der Aufheizphase umwälzt, so dass lediglich kleine Flüssigkeitsmengen aus der dem Unterkorb zugeordneten Sprühvorrichtung austreten können. Nach Erreichen der gewünschten Spülflüssigkeitstemperatur wird über die Programmsteuerung die Umwälzleistung erhöht, so dass die Sprühsysteme entsprechend der Leistungsvorgabe das Spülgut mit einer entsprechend aufgeheizten Spülflüssigkeit beaufschlagen können.

Bei einer weiteren bevorzugten Ausführungsform der vorliegenden Erfindung wird in der Geschirrspülmaschine ein separater Behälter bereitgestellt, der mit einer Heizeinrichtung versehen ist und die Spülflüssigkeit, ohne umgewälzt zu werden, aufheizt, bevor diese von der Umwälzpumpe umgewälzt wird und schließlich das Spülgut benetzt.

Durch das erfindungsgemäße Verfahren und die erfindungsgemäße Geschirrspülmaschine wird der Vorteil erzielt, die für die Aufheizung des Spülguts verwendete Energie im wesentlichen einzusparen, da lediglich die Spülflüssigkeit über geeignete Maßnahmen (eigene Fließstrecke, geringere Umwälzpumpenleistung oder separater Heizbehälter) aufgeheizt wird, bevor dieses auf das Spülgut trifft.

Bei der Anwendung des erfindungsgemäßen Verfahrens wird ferner berücksichtigt, dass die Temperaturdifferenz zwischen der aufgeheizten Spülflüssigkeit und dem Spülgut nicht so groß ist, dass aufgrund des Temperatursprungs Schäden am Spülgut entstehen. Hierzu sind an der erfindungsgemäßen Geschirrspülmaschine Mittel vorgesehen, die ein manuelles An- und Ausschalten des erfindungsgemäßen Verfahrens ermöglichen. Denn wird das erfindungsgemäße Verfahren beispielsweise bei Spülgut verwendet, welches aus Kristall oder Keramik besteht, so kann der rasche Temperaturanstieg zu Rissen im Kristall und somit zum Totalverlust des Kristallgeschirrs oder bei der Verwendung von Keramik zu Haarrissen in der Glasur führen. Vorteilhafterweise weist die erfindungsgemäße Geschirrspülmaschine eine Taste am Bedienfeld auf, welche ein Zu- und Abschalten des erfindungsgemäßen Verfahren ermöglicht.

## Patentansprüche

1. Verfahren zur Reduzierung des Energieverbrauchs während eines Teilprogrammschrittes, z. B. "Reinigen" und "Klarspülen" in einem Spülprogramm in einer Geschirrspülmaschine, wobei in einem ersten Schritt die Spülflüssigkeit auf eine vorbestimmte Temperatur aufgeheizt wird und die Spülflüssigkeit während dieser Aufheizphase im wesentlichen nicht auf in der Geschirrspülmaschine befindliches Spülgut aufschlägt und in einem zweiten Schritt die auf die vorbestimmte Temperatur aufgeheizte Spülflüssigkeit auf das im wesentlichen nicht erwärmte - Spülgut auftrifft, **dadurch gekennzeichnet, dass** die Spülflüssigkeit durch eine vom Sprühsystem getrennten Fließstrecke geleitet wird und so die Spülflüssigkeit ohne Benetzung des Spülguts aufgeheizt werden kann.

2. Verfahren nach Anspruch 1, **dadurch gekennzeichnet, dass** durch eine von der Programmsteuerung ansteuerbare Ventilschaltung ein vom Sprühsystem getrennter, als Fließstrecke ausgebildeter, vorzugsweise im wesentlichen geschlossener Kreislauf zum Umwälzen der Spülflüssigkeit geöffnet wird, so dass während dieser Aufheizphase die Spülflüssigkeit nicht über das Sprühsystem auf das Spülgut gelangen kann.

3. Verfahren nach Anspruch 1 oder 2, **dadurch gekennzeichnet, dass** die Aufheizphase spätestens dann beendet ist, wenn das Spülgut die für die Spülflüssigkeit vorbestimmte Temperatur erreicht hat.

4. Verfahren nach einem der vorherigen Ansprüche, **dadurch gekennzeichnet, dass** die Spülflüssigkeit mittels Umwälzpumpe so umgewälzt wird, dass die Wärmeverteilung innerhalb der Spülflüssigkeit im wesentlichen homogen ist.

5. Verfahren nach einem der Ansprüche 1, 2 oder 3, **dadurch gekennzeichnet, dass** die Spülflüssigkeit in einem Vorheizbehälter auf eine bestimmte Temperatur aufgeheizt wird.

6. Geschirrspülmaschine zur Durchführung eines Verfahrens nach einem der vorherigen Ansprüche, **dadurch gekennzeichnet, dass** die Geschirrspülmaschine eine Fließstrecke aufweist, die so angeordnet und ausgebildet ist, dass die Spülflüssigkeit durch diese Fließstrecke strömt und dabei aufgeheizt wird und während des Aufheizens im wesentlichen nicht auf in der Geschirrspülmaschine befindliches Spülgut aufgebracht wird.

7. Geschirrspülmaschine nach Anspruch 6, **dadurch gekennzeichnet, dass** ein Behälter mit Heizeinrichtung vorgesehen ist.

8. Geschirrspülmaschine nach Anspruch 6 oder 7, **dadurch gekennzeichnet, dass** Mittel vorgesehen sind, um ein-Betreiben des Verfahrens nach einem der Ansprüche 1 bis 5 manuell hinzuzuschalten.

## Claims

1. Method of reducing energy consumption during a part program step, for example 'cleaning' and 'clear rinsing', in a rinsing program in a dishwashing machine, wherein in a first step the rinsing liquid is heated to a predetermined temperature and the rinsing liquid during this heating-up phase substantially does not act on stock, which is to be rinsed, located in the dishwashing machine and in a second step the rinsing liquid heated up to the predetermined temperature impinges on the substantially unheated stock to be rinsed, **characterised in that** the rinsing liquid is conducted through a flow path separate from the spray system and thus the rinsing liquid can be heated up without wetting the stock to be rinsed.

2. Method according to claim 1, **characterised in that** a circuit which is formed as a flow path separate from the spray system and which is preferably substantially closed is opened by a valve switching, which is controllable in drive by the program control, for circulation of the rinsing liquid so that during this heating-up phase the rinsing liquid cannot pass by way of the spray system to the stock to be rinsed.

3. Method according to claim 1 or 2, **characterised in that** the heating up phase is concluded at the latest when the stock, which is to be rinsed, has reached the temperature predetermined for the rinsing liquid.

4. Method according to one of the preceding claims, **characterised in that** the rinsing liquid is so circulated by means of a circulating pump that the heat distribution within the rinsing liquid is substantially homogeneous.

5. Method according to one of claims 1, 2 and 3, **characterised in that** the rinsing liquid is heated up in a preheating container to a defined temperature.

6. Dishwashing machine for carrying out a method according to one of the preceding claims, **characterised in that** the dishwashing machine has a flow path which is so arranged and formed that the rinsing liquid flows through this flow path and **in that** case is heated up and during the heating up is substantially withheld from application to stock, which is to be rinsed, located in the dishwashing machine.

7. Dishwashing machine according to claim 6, **characterised in that** a container with a heating device is provided.

8. Dishwashing machine according to claim 6 or 7, **characterised in that** means are provided in order to manually switch to operation of the method according to one of claims 1 to 5.

## Revendications

1. Procédé destiné à diminuer la consommation d'énergie pendant une étape de programme partiel, par ex. « lavage » et « rinçage » dans un programme de lavage dans un lave-vaisselle, dans lequel, à une première étape, le liquide de lavage est échauffé à une température prédéterminée et le liquide de lavage, pendant cette phase d'échauffement, ne percute pas essentiellement la vaisselle à laver se trouvant dans le lave-vaisselle et, dans lequel, à une deuxième étape, le liquide de lavage échauffé à la température prédéterminée touche la vaisselle à laver essentiellement non échauffée, **caractérisé en ce que** le liquide de lavage est guidé par un parcours d'écoulement séparé du système d'arrosage et **en ce que** le liquide de lavage peut être ainsi échauffé sans mouillage de la vaisselle à laver.

2. Procédé selon la revendication 1, **caractérisé en ce qu'**un circuit destiné à la circulation du liquide de lavage, de préférence essentiellement fermé, séparé du système d'arrosage et exécuté en tant que parcours d'écoulement est ouvert au moyen d'un circuit à soupape réglable par la commande de programme, de sorte que pendant cette phase d'échauffement, le liquide de lavage ne peut pas arriver sur la vaisselle à laver par l'intermédiaire du système d'arrosage.

3. Procédé selon la revendication 1 ou 2, **caractérisé en ce que** la phase d'échauffement est terminée au plus tard lorsque la vaisselle à laver a atteint la température prédéterminée pour le liquide de lavage.

4. Procédé selon l'une quelconque des revendications précédentes, **caractérisé en ce que** le liquide de lavage est mis en circulation au moyen d'une pompe de circulation, de telle manière que la répartition de chaleur dans le liquide de lavage est essentiellement homogène.

5. Procédé selon l'une quelconque des revendications 1, 2 ou 3, **caractérisé en ce que** le liquide de lavage est échauffé à une température déterminée dans un réservoir de préchauffage.

6. Lave-vaisselle destiné à la réalisation d'un procédé selon l'une quelconque des revendications précédentes, **caractérisé en ce que** le lave-vaisselle présente un parcours d'écoulement qui est disposé et exécuté de telle manière que le liquide de lavage circule par ce parcours d'écoulement et qu'il est en même temps échauffé et **en ce que**, pendant l'échauffement, il n'est pas essentiellement appliqué sur la vaisselle à laver se trouvant dans le lave-vaisselle.

7. Lave-vaisselle selon la revendication 6, **caractérisé en ce qu'**un réservoir muni d'un dispositif de chauffage est prévu.

8. Lave-vaisselle selon la revendication 6 ou 7, **caractérisé en ce que** des moyens sont prévus afin de connecter manuellement en plus une opération du procédé selon l'une quelconque des revendications 1 à 5.
